# EUROPEAN PATENT APPLICATION

(11) **EP 3 431 719 A1**
(43) Date of publication of application: **23.01.2019**
(21) Application number: 17182618.3
(22) Date of filing: 21.07.2017
(51) Int. Cl.: F01D 21/00, B33Y 80/00

(54) **MANUFACTURING METHOD**

(71) Applicant: Siemens Aktiengesellschaft, 80333 München (DE)
(72) Inventor: Balandier, Quentin Luc, Lincoln, LN5 7QN (GB); Hughes, Peter, Fleckney, Leicester, LE8 8TE (GB); Pan, Wenke, Welton, Lincoln, LN2 3UB (GB)
(74) Representative: Maier, Daniel Oliver

(57) **Abstract**

A method of manufacturing a gas turbine engine component comprising the steps of deriving a characteristic mechanical attribute of a first sample component. It may be derived as a function of a derived mechanical attribute of the first sample component, a derived mechanical attribute of a second sample component, and a determined characteristic mechanical attribute of the second sample component manufactured using an Additive Manufacturing method and empirically tested. The method further comprises determining if the first sample component characteristic mechanical attribute meets a predetermined requirement to thereby indicate that manufacture of the first sample component would result in a component meeting the predetermined requirement.

## Description

The present disclosure relates to a method of manufacturing.

In particular the disclosure is concerned with a method of manufacturing a component for turbomachinery, for example a component of a gas turbine engine, which comprises determining mechanical attributes of the component.

### Background

Modern gas turbine engines operate at high temperatures with components that move at high speed under high loads.

Components of the machinery must meet certain certification (i.e. qualification) requirements, and this is particularly true of turbine rotor blades, stator vanes and discs. Certification requirements may include for example demonstration of the component's strength, demonstration of adequate vibrations levels, cyclic life analysis, creep life analysis, and failure mode analysis. The demonstration of the certification requirements can be supported by evidence obtained from component rig or engine tests.

The components may also meet certain commercial life requirements to ensure the engine operates for as long as possible between maintenance cycles.

The current qualification process of an engine component involves many steps including design development, mechanical integrity assessments and testing of development parts made from the same material, and by the same manufacturing process, as the desired production part. Such highly specialized components may be made by investment casting or forging techniques, which are complex processes requiring much design, development and trial and error to result in a part suitable for testing.

Any required redesign of the component is time consuming, since not only must the component itself be reconfigured, but so must the manufacturing process.

Additionally, since so much effort must go into producing a development part by this process, few components are usually available for component rig and engine testing. The testing of the part may be scheduled to avoid reaching failure point (e.g. evidence of cracking), thus rig and engine testing may not yield sufficient data to accurately infer the operational life of the component. Also scope for design change after the component has been tested is very limited.

Consequently, an overly conservative (i.e. in other words, overdesigned) component may be produced or an overly conservative life estimate may be made, resulting in replacement of parts in service before their useful life has expired.

Also, in a worst case scenario, a component may also be tested and fail some of the certification requirements. This may lead to a complete re-launch of a development process.

Hence a method of manufacturing a component for a turbo machine, for example of a gas turbine engine, which includes steps that reduces development time and increases the accuracy of prediction of behaviour of the component, is highly desirable.

### Summary

According to the present disclosure there is provided a method as set forth in the appended claims. Other features of the invention will be apparent from the dependent claims, and the description which follows.

Accordingly there may be provided a method of manufacturing a gas turbine engine component. The method may comprise the steps of : generating a component design; (STEP 1A) determining characteristic material properties of a first material for the manufacture of a first sample component according to the component design; (STEP 1 B) determining characteristic material properties of a second material for the manufacture of a second sample component according to the component design; (STEP 2A) deriving a mechanical attribute of the first sample component as a function of the determined characteristic material properties of the first material; (STEP 2B) deriving a mechanical attribute of the second sample component as a function of the determined characteristic material properties of the second material. The method may further comprise the step (STEP 3) of manufacturing the second sample component using an additive manufacturing process and determining a characteristic mechanical attribute of the second sample component using an empirical method. The method may also comprise the step (STEP 4) of deriving a characteristic mechanical attribute of the first sample component as a function of : the derived first sample component mechanical attribute; the derived second sample component mechanical attribute; and the determined characteristic mechanical attribute of the second sample component. The method may further comprise determining if the first sample component characteristic mechanical attribute meets a predetermined requirement to thereby indicate that manufacture of the first sample component would result in a component meeting the predetermined requirement. The predetermined requirement may be defined as a function of the characteristic material properties of the first material and the second material.

The method may further comprise the steps of: (STEP 1C) determining a characteristic material property of a third material for the manufacture of a third sample component according to the component design; (STEP 2C) deriving a mechanical attribute of the third sample component as a function of the determined characteristic material property of the third material. The method may also comprise the step (STEP 3C) of manufacturing the third sample component using an additive manufacturing process and determining a characteristic mechanical attribute of the third sample component using an empirical method. The method may also comprise the step (STEP 4C) of deriving a characteristic mechanical attribute of the first sample component as a function of, and in addition to the parameters defined in the preceding paragraph, the derived third sample component mechanical attribute; and the determined characteristic mechanical attribute of the third sample component. The predetermined requirement may be further defined as a function of the characteristic material properties of the first material and the third material.

The first sample component may be manufactured by a casting process or forging process.

The characteristic mechanical attribute may be one of:
a. Static strength;
b. Vibration characteristics;
c. Cyclic life;
d. Creep life;
e. Oxidation life;
f. Corrosion life; or
g. Failure mode.

(STEP 2A, 2B) The sample component mechanical attribute may be derived by a computational method comprising at least one of finite element analysis and mechanical integrity analysis.

(STEP 2A, 2B) The mechanical integrity analyses may comprise one of:
a. Static strength analysis
b. Vibration analysis
c. Creep analysis;
d. Fatigue analysis;
e. Crack growth / damage tolerance analysis;
f. Oxidation analysis;
g. Corrosion analysis; and
h. Failure mode analysis.

(STEP 3) The empirical method may comprise component testing configured to determine at least one of: Static strength; Vibration (High Cycle Fatigue) characteristics; Low Cycle Fatigue characteristics; Creep characteristics; Oxidation characteristics; Corrosion characteristics; and/or Failure and/or Degradation mechanisms.

(STEP 3) The empirical method may comprise including the sample component into a test turbo machine and operating the turbo machine.

Determining vibration characteristics may comprise empirical testing of a damping system applied to the second sample component.

Determining the oxidation and/or corrosion characteristics may comprise empirical testing of a coating system applied to the second sample component.

(STEP 4) Deriving the characteristic mechanical attribute of the first sample component may comprises the step of : determining a characteristic material properties ratio value between : the characteristic material properties of the first material, and the same characteristic material properties of the second material. The method may also comprise determining a mechanical attribute ratio value between the derived : mechanical attribute of the first sample component, and the same mechanical attribute of the second sample component. The method may further comprise the step of deriving the characteristic mechanical attribute of the first sample component as a function of the determined ratios.

The method may further include the step of : manufacturing the first sample component according to the component design if the mechanical attribute(s) of the first sample component meets the predetermined requirement.

The component may be a gas turbine engine rotor blade, stator vane or rotor disc.

Hence there is provided a method of manufacturing a component which includes a step of determining mechanical attributes (such as strength, vibratory response, failure mode, cyclic life, creep life) of a gas turbine engine component, for example a turbine rotor blade, a turbine stator vane or a turbine disc.

Put another way, there is provided a method of determining mechanical attributes (such as strength, vibratory response, failure mode, cyclic life, creep life) of a gas turbine engine component, for example a turbine rotor blade, a turbine stator vane or a turbine disc, which forms part of a design and manufacturing process.

The use of an additive manufacturing material and additive manufacturing technique to predict the properties and hence mechanical attributes of a component made from a different material and/or by a different technique provides significant advantages when the development manufacturing technique is more rapid than a conventional production method.

Hence a testing and verification phase of a manufacturing process may be considerably accelerated.

### Brief Description of the Drawings

Examples of the present disclosure will now be described with reference to the accompanying drawings, in which:
Figure 1 shows a schematic sectional view of an example of a gas turbine engine which comprises a gas turbine engine component manufactured according to the present disclosure;
Figure 2 shows an enlarged view of components of the arrangement shown in Figure 1;
Figure 3 graphically shows a method according to the present disclosure; and
Figure 4 graphically shows an alternative method according to the present disclosure.

### Detailed Description

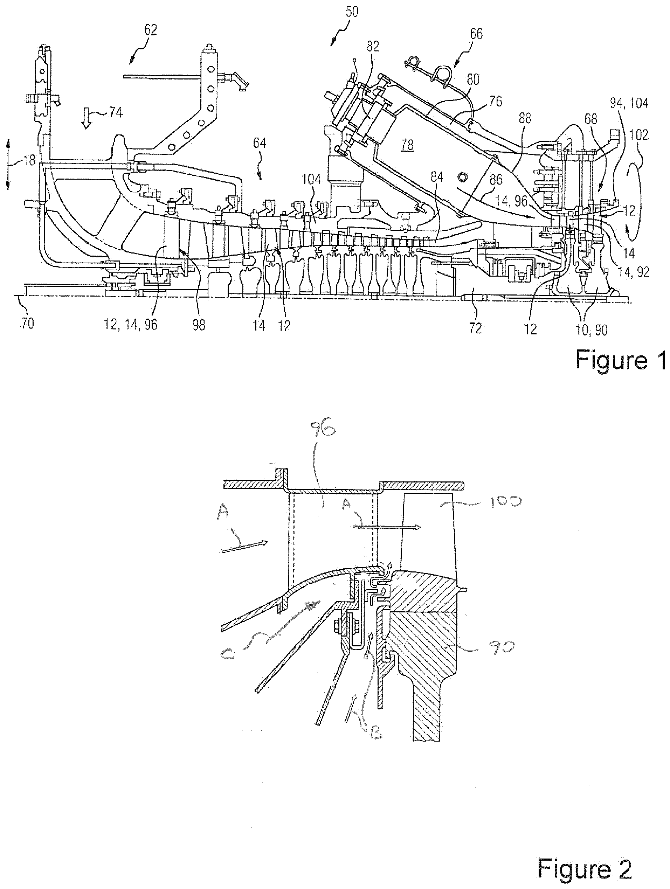

Figure 1 shows an example of a gas turbine engine 60 in a sectional view which may comprise a gas turbine engine component (e.g. an aerofoil, rotor blade, stator vane or rotor disc) according to the present disclosure. The gas turbine engine 60 comprises, in flow series, an inlet 62, a compressor section 64, a combustion section 66 and a turbine section 68, which are generally arranged in flow series and generally in the direction of a longitudinal or rotational axis 70. The gas turbine engine 60 further comprises a shaft 72 which is rotatable about the rotational axis 70 and which extends longitudinally through the gas turbine engine 60. The shaft 72 drivingly connects the turbine section 68 to the compressor section 64. In operation of the gas turbine engine 60, air 74, which is taken in through the air inlet 62 is compressed by the compressor section 64 and delivered to the combustion section or burner section 66. The burner section 66 comprises a burner plenum 76, one or more combustion chambers 78 defined by a double wall can 80 and at least one burner 82 fixed to each combustion chamber 78. The combustion chambers 78 and the burners 82 are located inside the burner plenum 76. The compressed air passing through the compressor section 64 enters a diffuser 84 and is discharged from the diffuser 84 into the burner plenum 76 from where a portion of the air enters the burner 82 and is mixed with a gaseous or liquid fuel. The air/fuel mixture is then burned and the combustion gas 86 or working gas from the combustion is channelled via a transition duct 88 to the turbine section 68.

The turbine section 68 may comprise a number of blade carrying discs 90 or turbine wheels attached to the shaft 72. In the example shown, the turbine section 68 comprises two discs 90 which each carry an annular array of turbine assemblies 12, which each comprises an aerofoil 14 embodied as a turbine blade 100. Turbine cascades 92 are disposed between the turbine blades 100. Each turbine cascade 92 carries an annular array of turbine assemblies 12, which each comprises an aerofoil 14 in the form of guiding vanes (i.e. stator vanes 96), which are fixed to a stator 94 of the gas turbine engine 60.

Figure 2 shows an enlarged view of a stator vane 96 and rotor blade 100. Arrows "A" indicate the direction of flow of combustion gas 86 past the aerofoils 96,100. Arrows "B" show air flow passages provided for sealing, and arrows "C" indicate cooling air flow paths for passing through the stator vanes 96. Cooling flow passages may be provided in the rotor disc 90 which extend radially outwards to feed the rotor blade 100.

The combustion gas 86 from the combustion chamber 78 enters the turbine section 58 and drives the turbine blades 100 which in turn rotate the shaft 72 to drive the compressor. The guiding vanes 96 serve to optimise the angle of the combustion or working gas 86 on to the turbine blades.

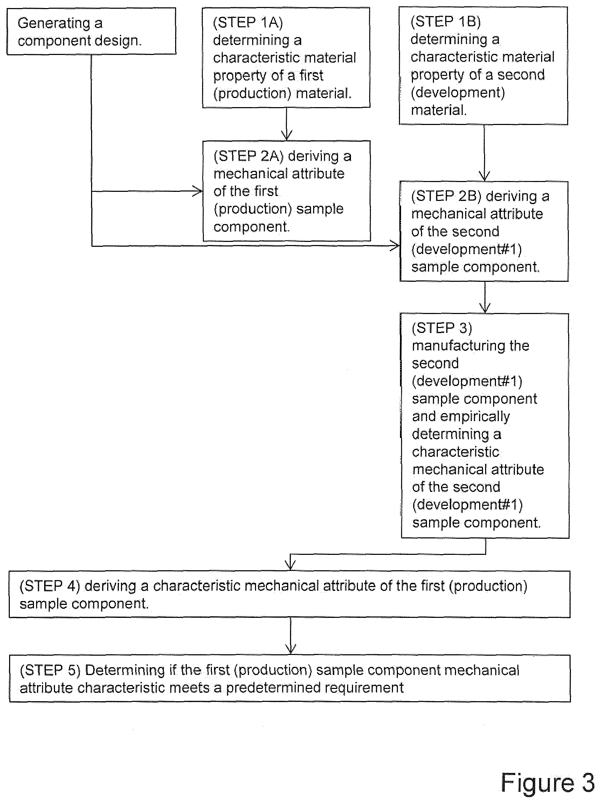

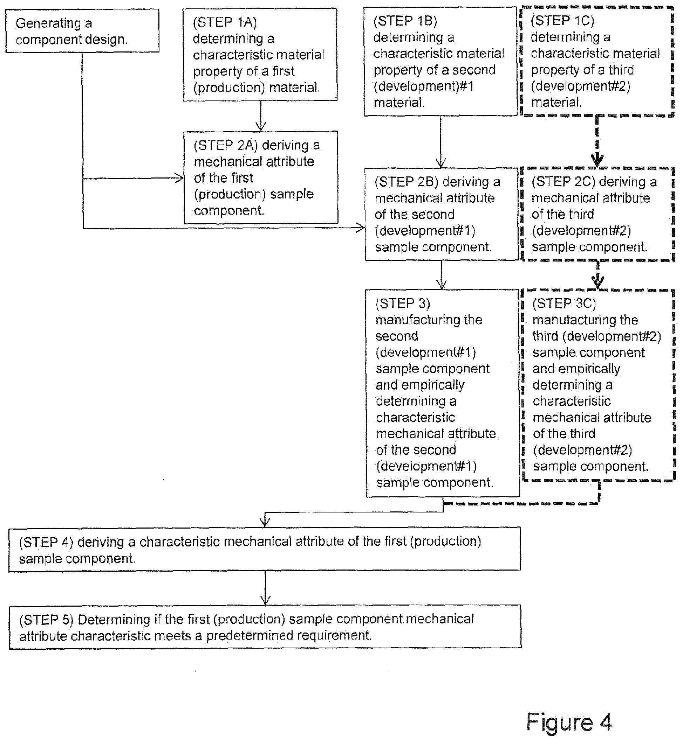

The present disclosure relates to a method of manufacturing a component design which comprises design, testing and qualification of a component for a turbo machine, for example a rotor blade, stator vane or rotor disc. Figures 3, 4 illustrate features of the method of the present disclosure.

Starting with a generation of a component design, and in addition to standard development and verification steps, the method of the present disclosure includes the feature of using a development component manufactured to the component design by an additive manufacturing process for computational modelling and empirical testing in order to predict the behaviour of a production part having the same component design. As will be described later, this is advantageous as it greatly decreases the amount of time in development testing stage of the manufacturing process.

An additive manufacturing process is a method by which material is formed together in a progressive way to build a product. For example selective laser melting (SLM), or other such 3D printing type methods. Conversely the production component may be made by a forging or casting process. For example an investment casting method, or other method comprising a casting process. However, in a further example the production component may also be made by additive manufacturing. Hence the overall benefit of the method of the present disclosure is the use of additive manufacturing in the design and verification steps of defining an operational life or any mechanical attribute of a component for a turbo machine (for example a gas turbine engine). For example the characteristic mechanical attribute may be one of: Static strength, Vibration characteristics, Cyclic life, Creep life, Oxidation life, Corrosion life, or Failure mode.

The method of manufacturing of the present disclosure involves the following Steps to 1 to 5, which are set out in Figures 3, 4.

### STEP 1: DETERMINING MATERIAL PROPERTIES

This may be broken down into a number of sub-steps, Step 1A and Step 1B, as shown in Figure 3.

### STEP 1A

Determining characteristic material properties of a first material for the manufacture of a production (e.g. final) sample component according to the component design (i.e. a "first sample component").

The first material is an alloy considered for the production part, characterized through standard material testing process (for example specimen testing or "disc spin" testing) to evaluate:
a. physical properties (e.g. elasticity properties, density, thermal properties)
b. static tensile properties (e.g. proof and ultimate tensile properties); ductility; Low Cycle Fatigue; High Cycle Fatigue; crack growth; creep; oxidation; or corrosion properties.

The specimen testing may be executed at different temperature and stress (or strain) levels, and enables an evaluation of typical and minimum material data values for the properties.

The first material may be one of any standard material used in gas turbines, for example steel, titanium or nickel based alloys. The material may be forged, conventionally cast, directionally solidified cast, or in a single crystal form.

The first material may be produced by a forging or casting process. In another example the first material may be produced by an additive manufacturing technique. Hence the test specimen(s) of the first material is manufactured by the same manufacturing process as the production sample component (for example, by casting).

### STEP 1 B

Determining characteristic material properties of a second material for the manufacture of a development (i.e. test) sample component according to the component design (i.e. a "second sample component"). The second material is suitable for additive manufacturing.

Additionally, in examples where further test samples are desired, as shown in Figure 4, the method may include the further step of:

### STEP 1C

Determining characteristic material properties of a third material for the manufacture of a further development (i.e. test) sample component according to the component design (i.e. a "third sample component"). The third material is suitable for additive manufacturing.

Further test samples may also be included in the analysis.

The second material and third material may be, for example, one of an additive manufactured form of the production material or an additive material whose composition is similar to the production material.

The second material and third material are materials suitable for an additive manufacturing technique. Hence specimens used for determining characteristic material properties of the second and third materials are manufactured by the same manufacturing process as the development sample components (i.e. by an additive manufacturing process). The second and third materials may have a different composition and/or a different material structure to each other. Additionally the first material will have a different composition and/or a different material structure to the second and third material.

For example, the second and third materials (and any further materials) considered for reference may be characterized in Steps 1B, 1C through standard material testing processes (i.e. specimen testing) to evaluate the same (or similar) range of properties as conducted in Step 1A, as comparison between the results is required later in the method.

### STEP 2: COMPUTATIONAL ANALYSIS

This may be broken down into a number of sub-steps, as shown in Figure 3.

### STEP 2A

Deriving a mechanical attribute of the first (production) sample component as a function of the determined characteristic material properties of the first material.

The mechanical attribute may be one of: Static strength, Vibration characteristics, Cyclic life, Creep life, Oxidation life, Corrosion life, or Failure mode.

Alternatively more than one mechanical attribute may be determined.

Hence in this step the component design considered for production is analyzed by standard Finite Element and mechanical integrity analyses using the material properties of the alloy(s) considered for production as defined in Step 1A.

Mechanical integrity analyses may include static strength analysis, vibration analysis, creep analysis, fatigue analysis, crack growth / damage tolerance analyses, oxidation and corrosion analyses, failure mode analysis.

### STEP 2B

Deriving one or a plurality of mechanical attribute(s) of the second (development#1) sample component as a function of the determined characteristic material properties of the second material.

Additionally, in examples where further test samples are desired, as shown in Figure 4, the method may include the further step of:

### STEP 2C

Deriving one or a plurality of mechanical attribute(s) of the third (development#2) sample component as a function of the determined characteristic material properties of the third material.

Hence in Step 2B the component considered for production is analyzed by standard Finite Elements and mechanical integrity analyses using the second additive material properties as defined in Step 1B, and in Step 2C (where present) the component considered for production is analyzed by standard Finite Elements and mechanical integrity analyses using the third additive material properties as defined in Step 1C.

The chosen analysis will be of the same type as conducted in Step 2A, as comparison between the results is required later in the method.

### STEP 3: MANUFACTURE AND EMPIRICAL TESTING OF THE DEVELOPMENT COMPONENT(S)

### STEP 3

In the example of Figure 3, this step comprises manufacturing the second (development#1) sample component using an additive manufacturing process and determining a characteristic mechanical attribute of the second (development#1) sample component(s) using an empirical method. The empirical method may comprise including the sample (development#1) component into a test turbo machine and operating the turbo machine. For example, where the component is a component for a gas turbine engine, such as a stator vane, rotor blade or rotor disc, the empirical method may comprise including the sample (development #1) component into a rig or test gas turbine engine and running the test engine/rig as conditions akin to those - or more severe than those - that the production component is expected to experience during its operational life.

Additionally, in examples where further test samples are desired, as shown in Figure 4, the method may include the further step of:

### STEP 3C

Manufacturing the third (development#2) sample component using an additive manufacturing technique and determining a characteristic mechanical attribute of the third (development#2) sample component using an empirical method.

The empirical method may comprise component testing or accelerated component testing configured to determine at least one of: Static strength, Vibration (High Cycle Fatigue) characteristics, Low Cycle Fatigue life, Creep life, Oxidation life, Corrosion life and/or Failure and/or Degradation mechanisms.

Hence the or each development sample component made from an additive material by an additive manufacturing technique is subjected to testing (or accelerated testing), which may comprise at least one of the following tests.

### Strength test

Testing the additive manufactured component to determine the component's ultimate strength or the component's onset of plastic deformation.

### Vibration/High Cycle Fatigue (HCF) Test

Testing of the additive manufactured component in indicative conditions, for example a prototype rotor blade in an engine test, in which standard strain gauge instrumentation may be used to provide the dynamic response of the blade in an engine environment. Using Step 2A, 2B (and optionally Step 2C) enables calibration and prediction of the production component vibration characteristics and dynamic response.

A weaker sample component may also be tested in an engine test (e.g. a development sample component having a lower HCF strength than the production part, as characterized in Steps 1A, 1B and optionally Step 1C) to provide an early indication of the onset of cracking (or confirmation of no cracking) of the development part for a known engine testing cycle. Using Step 2A and Step 2B (and optionally Step 2C) thus enables calibration and prediction of the production component HCF strength.

The empirically derived values of HCF strength may then be used in conjunction with information derived in Steps 2A, 2B and 2C to predict HCF strength for the first sample production component, as will be described with reference to Step 4 below.

Additionally, testing of additive manufactured prototype components in engine tests with different modal frequencies enables an evaluation of mis-tuning effects in an engine environment.

Testing of additive manufactured prototype components with different damping configuration (for example, testing of turbine blade under-platform damper(s) or turbine blade shroud design(s)) in engine tests also enables the evaluation of different damping systems to the component dynamic response.

That is to say, determining vibration characteristics may comprise empirical testing of a damping system applied to the second and/or third sample components (and/or further sample components). Put another way, the method of manufacture of the present disclosure may comprise the step of providing/configuring a damping system as part of the second and/or third sample components (and/or further sample components) and then determining vibration characteristics of the damping system using empirical testing.

### Low Cycle Fatigue (LCF) Test

A weaker development sample component may be tested in an cyclic engine type test (e.g. a development sample component having a lower LCF strength than the production part, as characterized in Steps 1A and 1C (and optionally 1C)) to provide data on the onset of cracking (or confirmation of no cracking) of the development part for a known engine cycle.

The empirically derived values of LCF strength may then be used in conjunction with information derived in Steps 2A, 2B and 2C to predict LCF strength for the first sample production component, as will be described with reference to Step 4 below.

### Creep Test

A weaker development sample component may be tested in an engine test (e.g. a development sample component having a lower creep strength than the production part, as characterized in Steps 1A, 1 B (and optionally Step 1 C)) to provide data on elongation of the development sample component during engine test.

The empirically derived values of creep life may then be used in conjunction with information derived in Steps 2A, 2B and 2C to predict creep life for the first sample production component, as will be described with reference to Step 4 below.

Hence the above HCF, LCF and Creep tests may be conducted with standard sample development components, or alternatively or additionally be conducted with deliberately weakened structures.

Additionally or alternatively the above HCF, LCF and Creep tests may be executed with sample development components that are deliberately overstressed by a predetermined amount. That is to say the sample development component may also be tested with an overstress feature (for example stress concentration feature, hole, notch, thinner wall or reduction of cross sectional area) to guarantee an additional overstress level and hence an additional trade-off between test life and service life.

By way of a non-limiting example, a cyclic test of 500 cycles with a 10% overstress in a sample development component may be determined to be equivalent to a typical service life of 10,000 cycles (for example) for the production component. A knock down factor, based on the specimen testing data, may then be applied to declare a minimum life for the production component.

The above steps (HCF (vibration), LCF, creep) require a one-dimension calibration (i.e. one development sample component reference only), as illustrated in Figure 3.

### Creep / fatigue interaction Test

Such testing may comprise accelerated testing of the second sample component and third sample component in an engine test, each with a different fatigue strength and creep strength ratio compared to the production sample component.

Hence for the second sample development component made from second material, fatigue strength and creep strength may be determined, and for the third sample development component made from third material, fatigue strength and creep strength may be determined.

These empirically derived values of onset of cracking for the same component may then be used in conjunction with information derived in Steps 2A, 2B and 2C to predict creep / fatigue interaction (and thus fatigue strength and creep strength) for the first sample production component, as will be described with reference to Step 4 below.

The above step (creep / fatigue interaction) requires a two dimension calibration (i.e. two development sample components, as illustrated in Figure 4).

### Corrosion and oxidation tests

The additive manufactured sample components can be tested to determine the component oxidation and corrosion strength.

Determining oxidation and/or corrosion characteristics may comprise empirical testing of a coating system applied to the second and/or third sample components (and/or further sample components.) That is to say, the method of manufacture of the present disclosure may comprise the step of applying a coating to the second and/or third sample components (and/or further sample components) and then determining oxidation and/or corrosion characteristics of the coating system using empirical testing.

### Multiple interactions Test

The method may also be applied even if a high number of mechanisms interact (for example, HCF, LCF, creep, oxidation).

For example the second or third sample components (i.e. the additive manufactured material component) can be tested in an engine test until onset of cracking, for example using an overstress feature. Then the life of the production component can be declared conservatively, using the ratio of properties for the additive material component and production material component that yields the most unfavorable result for the life declaration.

### Failure and Degradation mode Test

The additive manufactured sample components can be tested to determine the failure mode or degradation mechanism (for example, crack initiation location and crack propagation trajectories) of the production component.

### STEP 4: MECHANICAL ATTRIBUTE(S) AND LIFE DEFINITION

This step provides a prediction of any mechanical attribute or operational life for the production component based upon the results of the computational analysis of the production and development sample components and empirical testing of the development sample components. That is to say, this step provides a prediction of any desired mechanical attribute or desired operational life characteristic for the production component.

STEP 4 derives any characteristic mechanical attribute or an operational life characteristic of the first (production) sample component as a function of:
a. the derived first (production) sample component mechanical attribute;
b. the derived second (development#1) sample component mechanical attribute; and
c. the mechanical attribute of the second (development#1) sample component determined using an empirical method.

Alternatively, in examples where further test samples are desired, the method may instead include STEP 4C deriving a characteristic mechanical attribute or an operational life characteristic of the first (production) sample component as a function of:
a. the derived first (production) sample component mechanical attribute;
b. the derived second (development#1) sample component mechanical attribute;
c. the derived third (development#2) sample component mechanical attribute;
d. the determined mechanical attribute of the second (development#1) sample component; and
e. the determined mechanical attribute of the third (development#2) sample component.

Deriving the characteristic mechanical attribute of the first (production) sample component may comprise the steps of :
a. determining a characteristic material property ratio value between the characteristic material property of the first material, and the same characteristic material property of the second (or third etc) material;
b. determining a mechanical attribute or life ratio value between the derived mechanical attribute of the first sample component, and the same mechanical attribute of (e.g. derived/determined in respect of) the second (or third etc) sample component.

The mechanical attribute of the first (production) sample component may then be derived as a function of the determined ratios and the test results of the development component(s). That is to say, the first (production) sample component characteristic mechanical attribute which is to be determined may then be derived as a function of the determined ratios and the test results of the development component(s) (e.g. the characteristic mechanical attribute(s) of the development sample component(s) determined using an empirical method).

Alternatively the above steps may be performed with reference to more than one characteristic material property, and with reference to more than one mechanical attribute.

For example, life may be determined as a function of:
a. ratio of material properties at a given stress level and temperature determined by specimen testing;
b. ratio of stress levels and operating life determined by Finite Element and life analysis; and/or
c. life demonstrated by testing of the additive material component.

Thus Step 4 utilizes the results of the specimen testing of the production material and development additive material (Steps 1A, 1 B, 1 C), the computational analyses of the production component and additive material component (Steps 2A, 2B, 2C), and the empirical testing (e.g. rig/engine test results) of the development additive material sample component(s) (Step 3, 3C) to derive a life (or characteristic mechanical attribute) for the production component against which it can be assessed.

### STEP 5: VALIDATION OF THE PRODUCTION DESIGN

Using the results of the Step 4, the production design can be assessed against predetermined requirement, which may be a certification (or qualification) requirement.

The predetermined requirement may be one of strength (for example minimum strength) and/or minimum life, and/or based on a demonstration of adequate vibration response (e.g. the component exhibits vibration levels with predetermined limits), life (including creep) analysis and/or corrosion and oxidation life, and/or a demonstration of a predictable failure mode (e.g. using failure mode analysis).

The assessment takes the form of determining if the first sample component characteristic mechanical attributes meets the predetermined requirement to thereby indicate that manufacture of the first sample component would result in a component meeting the predetermined requirement. The predetermined requirement may be defined as a function of the characteristic material properties of the first material and the second material. Put another way, the predetermined requirement may be defined as a function of differences between the characteristic material properties of the first material and the second material. That is to say, the predetermined requirement may be defined as a function of relative values, and/or relative definitions, of the characteristic material properties of the first material and the second material.

In examples where further development materials are used as part of the method (for example the third material), the predetermined requirement may be defined as a function of the characteristic material properties of the first material relative to each of the second material, third material etc.

For example, the first sample (production) component may comprise a Nickel based alloy, and provided in a conventionally cast form.

The development (i.e. second, third etc sample) component made by additive manufacturing may have the same (or similar) chemical composition as the material of the production component, but not the same microstructure (for example the additive manufactured material may have a relatively small grain micro structure), and hence its mechanical attributes will be inherently different.

During analysis, the characteristic mechanical attributes of the additive manufactured nickel based alloy may compare to the characteristic mechanical attributes of the conventionally cast form of the alloys in the following ways :
The additive manufactured nickel based alloy may have a higher static strength than the conventionally cast form (for example Ultimate tensile strength or proof strength may be 20% higher);
The additive manufactured nickel based alloy may have a higher cyclic life than the conventionally cast form (for example, 2 times higher);
The additive manufactured nickel based alloy may have a lower creep strength than the conventionally cast form (for example, 2 times lower);
The additive manufactured nickel based alloy may have the same oxidation life as the conventionally cast form; and/or
The additive manufactured nickel based alloy may have the same corrosion life as the conventionally cast form.

However, the differences between the characteristic mechanical attributes will be highly dependent on difference in microstructure between the materials of the first sample (production) component and development components (i.e. second, third sample components etc). Hence the values above are predetermined on a case by case basis, based on a function of the characteristic material properties of the first material and second, third etc materials.

Hence the assessment uses one or more of the above factors to indicate that the first sample component, if manufactured, would meet predetermined requirement. Hence, in the above example :
provided the development sample component has a static strength at least 20% greater than predicted for the first sample component, then the first sample component is determined to meet the predetermined requirement for the mechanical attribute of static strength;
provided the development sample component has a cyclic life at least twice that of the first sample component, then the first sample component is determined to meet the predetermined requirement for the mechanical attribute of cyclic life;
provided the development sample component has a creep strength of at least half that of the first sample component, then the first sample component is determined to meet the predetermined requirement for the mechanical attribute of creep strength;
provided the development sample component has the same oxidation life as the first sample component, then the first sample component is determined to meet the predetermined requirement for the mechanical attribute of oxidation life; and/or
provided the development sample component has the same corrosion life as the first sample component, then the first sample component is determined to meet the predetermined requirement for the mechanical attribute of corrosion life.

If all the chosen requirements are met, it is thus indicated that the first sample component, if manufactured, would meet same predetermined requirement. Hence if all the selected requirements are met, the production design can be produced. If one or several chosen requirements are not met, the design of the production component should be changed. That is to say, if the predetermined mechanical requirement is not met, it is indicated that the component design, or the predetermined requirement, should be changed in order to arrive at an acceptable design that may be manufactured.

### STEP 6: MANUFACTURE AND EMPIRICAL TESTING OF PRODUCTION STANDARD COMPONENT

Prior to production, a part made to production standards (e.g. using the first material / production alloy, using the production manufacturing method, for example investment casting) may be produced and empirically tested (for example using the methods of Step 3 used on the development components made by additive manufacturing technique) to verify the result of Step 4 and 5.

The method further comprises determining by empirical testing if the first (production) sample component mechanical attributes meet a predetermined requirement.

If so, then the next step will be for manufacture and use of the final product made to the component design.

If not, then a revised component design may be produced and steps 1 to 4 repeated until the predetermined requirement for life is met.

Hence there is provided a method of determining the mechanical attributes of a gas turbine engine component, which may be a turbine rotor blade or turbine stator vane or disc.

Testing of specimen components made of the same material and by the same manufacturing technique as an intended production component is known. However the use of a material and manufacturing technique different to of the production material and production manufacturing technique to predict the properties and hence mechanical attributes or life of a component provides significant advantages when, in an example of the present disclosure, the development manufacturing technique is more rapid than the production method, or at least more rapid than conventional production methods. Hence additive manufacturing provides a means for quickly creating a development part that can be used to predict the mechanical attributes of a desired component, where the desired component may be made by a different technique and from a different material.

Although conventional specimen or rig testing provides physical properties that can be used in computational models, they tend to only measure one property at a time. In practice degradation mechanisms of materials interact. Therefore testing sample components in a "real" environment (for example a turbine blade in a turbine) enables a test in which degradation mechanisms interact and thus give a better indication of component performance that can be used to predict production standard components than specimen or rig testing alone.

Components made by additive manufacturing can be manufactured more readily and more cheaply than by conventional casting or forging techniques, and hence a higher number may be tested to failure (i.e. to the occurrence of cracking) over a wider range of conditions, thus providing a greater amount of valuable data with which performance of the production part may be inferred.

Hence a method according to the present disclosure reduces overall cost and development time of a component testing programme by accelerating the mechanical integrity qualification process.

It may also increase confidence in the component being tested, thereby reducing risk of wasting development and testing time later in process.

This method can also be applied to evaluate the interaction between other damaging mechanisms.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of manufacturing a gas turbine engine component comprising the steps of :
generating a component design;
(STEP 1A) determining characteristic material properties of a first material for the manufacture of a first sample component according to the component design;
(STEP 1B) determining characteristic material properties of a second material for the manufacture of a second sample component according to the component design;
(STEP 2A) deriving a mechanical attribute of the first sample component as a function of the determined characteristic material properties of the first material;
(STEP 2B) deriving a mechanical attribute of the second sample component as a function of the determined characteristic material properties of the second material;
(STEP 3) manufacturing the second sample component using an additive manufacturing process and determining a characteristic mechanical attribute of the second sample component using an empirical method; and
(STEP 4) deriving a characteristic mechanical attribute of the first sample component as a function of:
the derived first sample component mechanical attribute;
the derived second sample component mechanical attribute; and
the determined characteristic mechanical attribute of the second sample component;
the method further comprising determining if the first sample component characteristic mechanical attribute meets a predetermined requirement to thereby indicate that manufacture of the first sample component would result in a component meeting the predetermined requirement,
wherein the predetermined requirement is defined as a function of the characteristic material properties of the first material and the second material.

2. A method as claimed in claim 1 further comprising the steps of:
(STEP 1C) determining a characteristic material property of a third material for the manufacture of a third sample component according to the component design;
(STEP 2C) deriving a mechanical attribute of the third sample component as a function of the determined characteristic material property of the third material;
(STEP 3C) manufacturing the third sample component using an additive manufacturing process and determining a characteristic mechanical attribute of the third sample component using an empirical method; and
(STEP 4C) deriving the characteristic mechanical attribute of the first sample component as a function of, and in addition to the parameters defined in claim 1,
the derived third sample component mechanical attribute; and
the determined characteristic mechanical attribute of the third sample component; and
wherein the predetermined requirement is further defined as a function of the characteristic material properties of the first material and the third material.

3. A method as claimed in claim 1 or 2 wherein:
the first sample component is manufactured by a casting process or forging process.

4. A method as claimed in any one of claims 1 to 3 wherein the characteristic mechanical attribute is one of:
a. Static strength;
b. Vibration characteristics;
c. Cyclic life;
d. Creep life;
e. Oxidation life;
f. Corrosion life; or
g. Failure mode.

5. A method as claimed in any one of claims 1 to 4 wherein:
(STEP 2A, 2B) the sample component mechanical attribute is derived by a computational method comprising at least one of finite element analysis and mechanical integrity analysis.

6. A method as claimed in claim 5 wherein:
(STEP 2A, 2B) the mechanical integrity analyses comprises one of:
a. Static strength analysis
b. Vibration analysis
c. Creep analysis;
d. Fatigue analysis;
e. Crack growth / damage tolerance analysis;
f. Oxidation analysis;
g. Corrosion analysis; and
h. Failure mode analysis.

7. A method as claimed in any one of claims 1 to 6 wherein:
(STEP 3) the empirical method comprises component testing configured to determine at least one of:
Static strength;
Vibration (High Cycle Fatigue) characteristics;
Low Cycle Fatigue characteristics;
Creep characteristics;
Oxidation characteristics;
Corrosion characteristics; and/or
Failure and/or Degradation mechanisms.

8. A method as claimed in any one of claims 1 to 7 wherein:
(STEP 3) the empirical method comprises including the sample component into a test turbo machine and operating the turbo machine.

9. A method as claimed in claims 7 or 8 wherein:
determining the vibration characteristics comprises empirical testing of a damping system applied to the second sample component.

10. A method as claimed in any one of claims 7 to 9 wherein:
determining the oxidation and/or corrosion characteristics comprises empirical testing of a coating system applied to the second sample component.

11. A method as claimed in any one of claims 1 to 10 wherein:
(STEP 4) deriving the characteristic mechanical attribute of the first sample component comprises the steps of :
determining a characteristic material properties ratio value between :
the characteristic material properties of the first material, and
the same characteristic material properties of the second material;
determining a mechanical attribute ratio value between :
the derived mechanical attribute of the first sample component, and
the same mechanical attribute of the second sample component;
deriving the characteristic mechanical attribute of the first sample component as a function of the determined ratios.

12. A method as claimed in any one of claims 1 to 11 including the step of :
manufacturing the first sample component according to the component design if the mechanical attribute(s) of the first sample component meets the predetermined requirement.

13. A method as claimed in any one of claims 1 to 12, wherein:
the component is a gas turbine engine rotor blade, stator vane or rotor disc.
